# EUROPEAN PATENT APPLICATION

(11) **EP 4 831 685 A1**
(43) Date of publication of application: **28.10.2026**
(21) Application number: 26171076.8
(22) Date of filing: 08.04.2026
(51) Int. Cl.: G01S 7/497, G01S 7/48, G01S 17/42, G01S 17/89

(54) **OCCLUSION MONITORING METHOD, APPARATUS, TERMINAL DEVICE, AND COMPUTER PROGRAM PRODUCT**

(30) Priority: 21.04.2025 CN 202510502467
(71) Applicant: Suteng Innovation Technology Co., Ltd., Shenzhen, Guangdong 518000 (CN)
(72) Inventor: PENG, Jiang, Shenzhen (CN); ZHOU, Ming, Shenzhen (CN)
(74) Representative: RGTH

(57) **Abstract**

The present application is applicable to the field of radar technology, and provides an occlusion monitoring method, apparatus, terminal device, and computer program product. By dividing the radar detection angular space and obtaining the mapping relationship between the radar safety monitoring zone and the detection angles, upon determining that occlusion occurs in a certain zone, the detection angle corresponding to the LiDAR can be determined based on echo data. The safety monitoring zone where the occlusion is located, as well as the occlusion level, can then be determined through the aforementioned mapping relationship. An occlusion alarm is then issued based on the safety monitoring zone where the occlusion is located and the occlusion level, thereby ensuring the accuracy of occlusion monitoring, effectively simplifying the algorithmic complexity of the occlusion monitoring algorithm, effectively reducing the computing resources consumed by the occlusion monitoring algorithm, and improving the recognition efficiency of occlusion monitoring.

## Description

### TECHNICAL FIELD

The present application belongs to the field of radar technology, and particularly relates to an occlusion monitoring method, apparatus, terminal device, and computer program product.

### BACKGROUND

A LiDAR is a radar system that emits laser beams to detect information such as the position and velocity of a target. In addition to detecting the distance of an object, it can also detect the reflectance of an object used for target recognition. Among these, a functional safety LiDAR, compared to a non-functional safety LiDAR, embeds the function of safety zone occlusion monitoring, which is capable of detecting whether occlusion exists in a safety zone and issuing an alarm upon determining that occlusion exists in the safety zone.

Currently, occlusion monitoring algorithms typically employ clustering detection algorithms or neural network algorithms, which present problems such as high computational load, large requirement for computing resources, and low recognition efficiency.

### SUMMARY

Embodiments of the present application provide an occlusion monitoring method, apparatus, terminal device, and computer program product, capable of rapidly recognizing occlusions.

In a first aspect, an embodiment of the present application provides an occlusion monitoring method, comprising:
acquiring a plurality of target echo data;
performing occlusion monitoring within a safety monitoring zone based on the plurality of target echo data and preset spatial configuration information; wherein the preset spatial configuration information comprises angle-to-position mapping information, the angle-to-position mapping information being a mapping relationship between detection angles and specific positions within the safety monitoring zone; and the target echo data being echo data for which the amplitude value of a preamble signal corresponding to the echo data is greater than a preset threshold; and
executing an occlusion alarm operation upon determining that occlusion exists within the safety monitoring zone.

In one implementation of the first aspect, the performing occlusion monitoring within a safety monitoring zone based on the plurality of target echo data and preset spatial configuration information comprises:
acquiring a target echo count threshold corresponding to the safety monitoring zone; and
determining that occlusion exists within the safety monitoring zone upon determining that the count of the plurality of target echo data is greater than the target echo count threshold.

In one implementation of the first aspect, before the performing occlusion monitoring within a safety monitoring zone based on the target point cloud data and preset spatial configuration information, the method further comprises:
dividing the safety monitoring zone of a LiDAR based on the angular resolution of the LiDAR to obtain minimum mapping cells for mapping; and
generating the angle-to-position mapping information based on each of the minimum mapping cells and the detection angle range corresponding to each of the minimum mapping cells.

In one implementation of the first aspect, the generating the angle-to-position mapping information based on each of the minimum mapping cells and the detection angle range corresponding to each of the minimum mapping cells comprises:
encoding each of the minimum mapping cells in angular space order; and
determining the encoding as the angle-to-position mapping information.

In one implementation of the first aspect, the method further comprises:
acquiring the amplitude value of the preamble signal or the area value of the preamble signal corresponding to each of the plurality of target echo data; and
determining an occlusion level based on the amplitude value of the preamble signal or the area value of the preamble signal corresponding to each target echo signal;
wherein the executing an occlusion alarm operation upon determining that occlusion exists within the safety monitoring zone comprises:
   executing the occlusion alarm operation based on the occlusion level upon determining that occlusion exists within the safety monitoring zone.

In one implementation of the first aspect, the LiDAR is configured with a plurality of safety monitoring zones, and corresponding target echo count thresholds are set based on the detection requirements corresponding to different safety monitoring zones.

In one implementation of the first aspect, the target echo count threshold corresponding to the safety monitoring zone of the central detection region is not equal to the target echo count threshold corresponding to the safety monitoring zone of the edge detection region.

In a second aspect, an embodiment of the present application provides an occlusion monitoring apparatus, comprising:
an acquisition module, configured to acquire a plurality of target echo data;
a monitoring module, configured to perform occlusion monitoring within a safety monitoring zone based on the plurality of target echo data and preset spatial configuration information; wherein the preset spatial configuration information comprises angle-to-position mapping information, the angle-to-position mapping information being a mapping relationship between detection angles and specific positions within the safety monitoring zone; and the target echo data being echo data for which the amplitude value of a preamble signal corresponding to the echo data is greater than a preset threshold; and
an alarm module, configured to execute an occlusion alarm operation upon determining that occlusion exists within the safety monitoring zone.

In a third aspect, an embodiment of the present application provides a terminal device. The terminal device comprises a processor, a memory, and a computer program stored in the memory and executable on the processor. When the processor executes the computer program, the method described in the first aspect or any optional implementation of the first aspect is implemented.

In a fourth aspect, an embodiment of the present application provides a computer-readable storage medium. The computer-readable storage medium stores a computer program, and when the computer program is executed by a processor, the method described in the first aspect or any optional implementation of the first aspect is implemented.

In a fifth aspect, an embodiment of the present application provides a computer program product. When the computer program product is executed on a terminal device, the terminal device is caused to execute the method described in the first aspect or any optional implementation of the first aspect.

Compared with the prior art, the beneficial effects of the embodiments of the present application are as follows:
The occlusion monitoring method, apparatus, terminal device, and computer program product provided by the embodiments of the present application, by dividing the radar detection angular space and obtaining the mapping relationship between the radar safety monitoring zone and the detection angles, upon determining that occlusion occurs in a certain zone, the detection angle corresponding to the LiDAR can be determined based on the echo data. The safety monitoring zone where the occlusion is located, as well as the occlusion level, can then be determined through the aforementioned mapping relationship. An occlusion alarm is then issued based on the safety monitoring zone where the occlusion is located and the occlusion level, thereby ensuring the accuracy of occlusion monitoring, effectively simplifying the algorithmic complexity of the occlusion monitoring algorithm, effectively reducing the computing resources consumed by the occlusion monitoring algorithm, and improving the recognition efficiency of occlusion monitoring.

### BRIEF DESCRIPTION OF DRAWINGS

To more clearly illustrate the technical solutions in the embodiments of the present application, the drawings needed for describing the embodiments or the prior art are briefly introduced below. Obviously, the drawings described below are merely some embodiments of the present application. For those of ordinary skill in the art, other drawings may also be obtained from these drawings without any creative effort.
FIG. 1 is a schematic diagram of an application scenario of a LiDAR system according to an embodiment of the present application;
FIG. 2 is a schematic structural diagram of a LiDAR according to an embodiment of the present application;
FIG. 3 is a schematic flowchart of an implementation of an occlusion monitoring method according to an embodiment of the present application;
FIG. 4 is a schematic diagram of minimum mapping cell partitioning of the safety monitoring zone of the LiDAR according to an embodiment of the present application;
FIG. 5 is a schematic diagram of the safety monitoring zone of a LiDAR according to an embodiment of the present application;
FIG. 6 is a schematic flowchart of an implementation of step S12 in an occlusion monitoring method according to an embodiment of the present application;
FIG. 7 is a schematic structural diagram of an occlusion monitoring system according to an embodiment of the present application;
FIG. 8 is a schematic interaction diagram of an occlusion monitoring method according to an embodiment of the present application;
FIG. 9 is a schematic structural diagram of an occlusion monitoring apparatus according to an embodiment of the present application; and
FIG. 10 is a schematic structural diagram of a terminal device according to an embodiment of the present application.

### DETAILED DESCRIPTION

In the following description, for purposes of explanation rather than limitation, specific details such as particular system structures and techniques are set forth to provide a thorough understanding of the embodiments of the present application. However, it will be apparent to those skilled in the art that the present application may be practiced in other embodiments without these specific details. In other instances, detailed descriptions of well-known systems, devices, circuits, and methods are omitted so as not to obscure the description of the present application with unnecessary detail.

It should be understood that the term "and/or" as used in the specification and the appended claims of the present application refers to any combination and all possible combinations of one or more of the associated listed items, and includes these combinations. Additionally, in the description of the specification and the appended claims of the present application, the terms "first," "second," "third," and the like are used solely to distinguish descriptions and should not be understood as indicating or implying relative importance.

It should also be understood that reference to "one embodiment" or "some embodiments" or the like in the specification of the present application means that a particular feature, structure, or characteristic described in connection with that embodiment is included in one or more embodiments of the present application. Therefore, the phrases "in one embodiment," "in some embodiments," "in certain other embodiments," "in some other embodiments," and the like appearing at different places throughout the specification do not necessarily all refer to the same embodiment, but rather mean "one or more but not all embodiments," unless otherwise specifically indicated. The terms "comprising," "including," "having," and variations thereof all mean "including but not limited to," unless otherwise specifically indicated.

A LiDAR is a radar system that emits laser beams to detect information such as the position and velocity of a target. In addition to detecting the distance of an object, it can also detect the reflectance of an object used for target recognition. The specific operating principle of a LiDAR is to emit detection signals toward a target. Upon reaching the target, the detection signals are reflected by the target object, thereby generating echo data. The LiDAR receives the signals (echo data) reflected back from the target and, based on the echo data, can determine relevant information about the target, such as the target distance, position, height, velocity, attitude, shape, and reflectance, thereby achieving target detection, target tracking, and target recognition. Among these, the reflectance of an object refers to the percentage of radiant energy reflected by the object relative to the total radiant energy of the incident signal. The reflectance of different objects varies, and the reflectance of an object is primarily determined by factors such as the surface characteristics of the object, the wavelength of the incident signal, and the angle of incidence.

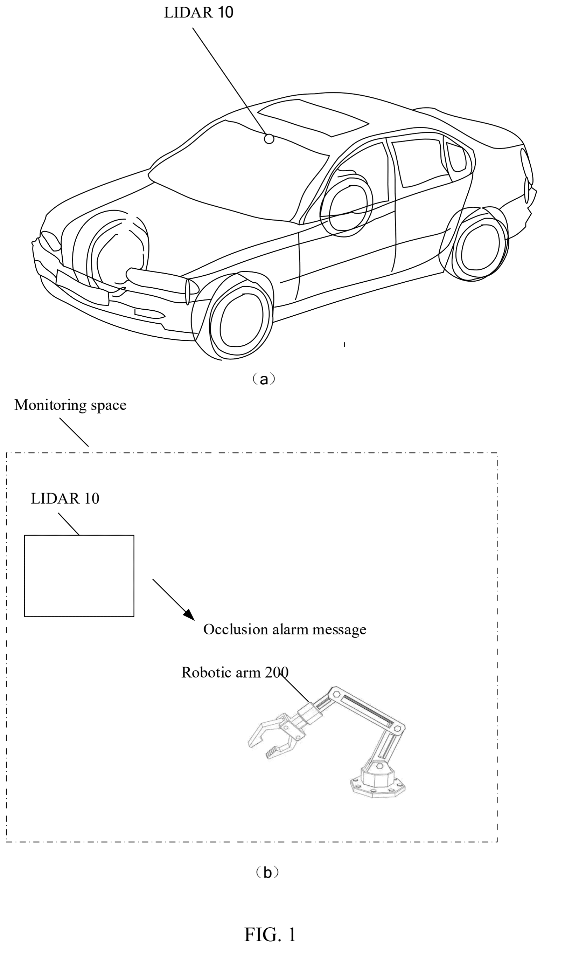

In one specific application scenario, FIG. 1 exemplarily shows a schematic diagram of an application scenario of a LiDAR system provided by an embodiment of the present application. As shown in FIG. 1(a), in this example, the LiDAR 10 may be installed on a vehicle, and is therefore referred to as a vehicle-mounted LiDAR system. The LiDAR may also be installed on other mobile devices such as mobile robots and ships. The present application does not impose any exclusive limitation on the type of mobile device.

In other examples, the LiDAR 10 may be used in a monitoring space as shown in FIG. 1(b). As shown in FIG. 1(b), the LiDAR 10 may monitor whether occlusion exists in the safety monitoring zone. Upon the LiDAR 10 detecting that occlusion exists in the safety monitoring zone, for example, when occlusion exists in the safety monitoring zone of the LiDAR as shown in FIG. 1(b), the LiDAR 10 may transmit an occlusion alarm message to the robotic arm 200. Upon receiving the alarm message, the robotic arm 200 may respond to the alarm message by executing corresponding actions, such as executing an automatic stop action, executing a movement operation, etc.

The LiDAR may be a mechanical LiDAR, a solid-state LiDAR, a semi-solid-state LiDAR, etc. The present application does not impose any exclusive limitation thereon.

In the present application, the LiDAR may comprise a control module and a data processing module. The control module is used to control the LiDAR to emit detection lasers and to control the LiDAR to receive echo lasers. The data processing module is used to process the echo data received by the radar and output the corresponding detection data.

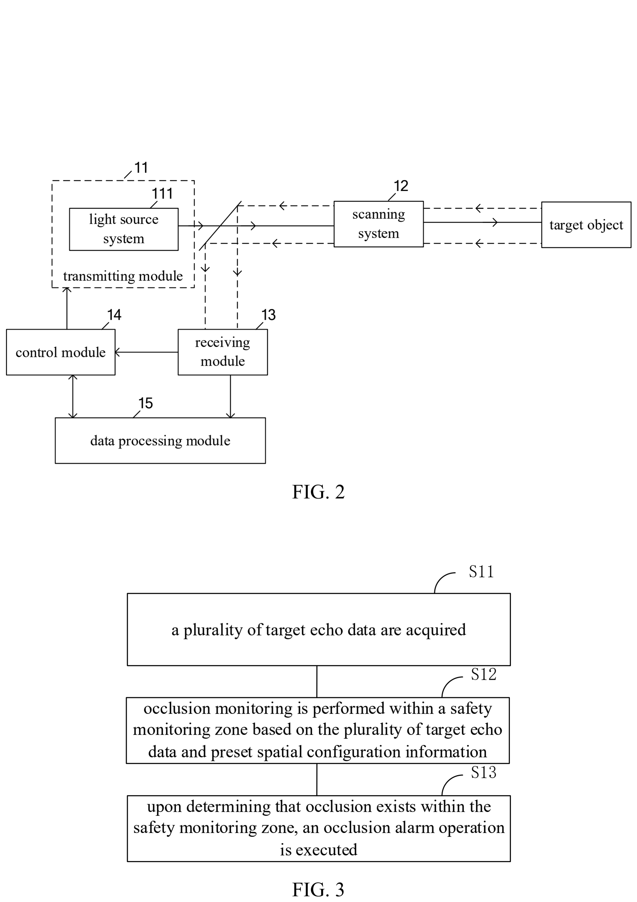

Exemplarily, please refer to FIG. 2, which shows a schematic structural diagram of a LiDAR. As shown in FIG. 2, the LiDAR 10 typically comprises a transmitting module 11, a scanning system 12, a receiving module 13, a control module 14, and a data processing module 15. The aforementioned transmitting module 11 may comprise a light source system 111.

Among these, the light source system 111 is used to generate the laser beams required for LiDAR 10 detection. Specifically, the light source system 111 may comprise optical devices such as a laser and a transmission lens assembly. The scanning system 12 is used to angularly deflect the laser beams generated by the light source system 111, enabling the laser beams to irradiate different positions at different moments. The scanning system 12 may be a mechanical scanning system (i.e., a rotating drive platform), a semi-solid-state scanning system (i.e., a rotating mirror, a galvanometer mirror, or a combination of both). The present application does not impose any exclusive limitation on the form of the scanning system.

It can be understood that the LiDAR in the present application may also be a solid-state LiDAR, which achieves scanning by controlling light sources at different angles to emit light in sequence. After the laser beams emitted by the light source system reach the target object and are reflected by the target object, the reflected light pulses are received by the reception sensor 131 in the receiving module 13, and then processed by an echo signal processing circuit to generate corresponding detection information.

The aforementioned control system 14 is used to control the LiDAR to emit detection lasers and to control the LiDAR to receive echo lasers. The data processing module 15 is used to process the echo data received by the radar and output the corresponding detection data.

Among these, a functional safety LiDAR, compared to a non-functional safety LiDAR, embeds the function of safety zone occlusion monitoring, is capable of detecting whether occlusion exists in a safety zone, and issues an alarm upon determining that severe occlusion exists in the safety zone.

Based on this, an embodiment of the present application provides an occlusion monitoring method. By dividing the radar detection angular space and obtaining the mapping relationship between the radar safety monitoring zone and the detection angles, upon determining that a target appears in a certain zone, the detection angle corresponding to the LiDAR can be determined based on point cloud data. The safety monitoring zone where the target is located, and the safety distance threshold corresponding to the safety monitoring zone, can then be determined through the aforementioned mapping relationship. Occlusion detection is then performed based on the safety distance threshold and the detection distance of the target, ensuring the accuracy of occlusion monitoring, effectively simplifying the algorithmic complexity of the occlusion monitoring algorithm, effectively reducing the computing resources consumed by the occlusion monitoring algorithm, and improving the recognition efficiency of occlusion.

The following provides a detailed description of the occlusion monitoring method provided by the embodiments of the present application with reference to the accompanying drawings:
Please refer to FIG. 3, which shows a schematic flowchart of the implementation of the occlusion monitoring method provided by an embodiment of the present application. It should be noted that the execution subject of the occlusion monitoring method may be the aforementioned LiDAR 10, and specifically may be the control system of the LiDAR 10.

Of course, in other embodiments, the execution subject of the aforementioned occlusion monitoring method may also be a terminal device communicatively connected to the LiDAR 10. The aforementioned terminal device may be a terminal such as a mobile phone, a desktop computer, a laptop computer, a tablet computer, or a wearable device, and may also be a device such as a cloud server or a radar auxiliary computer in various application scenarios. The present application does not impose any specific limitation thereon. The following description uses the LiDAR 10 as the execution subject as an example:
As shown in FIG. 3, the aforementioned occlusion monitoring method may specifically comprise steps S11 to S13.

In S11, a plurality of target echo data are acquired.

As an optional example, the aforementioned target echo data may be echo data received by the LiDAR after transmitting detection signals.

As an optional example, when the LiDAR performs detection scanning, it rotates at a preset rotation angle within the horizontal resolution angle range, and at each horizontal resolution angle, controls the LiDAR to transmit detection signals in channels within the vertical angle range and receive corresponding echo signals, thereby obtaining a column of point cloud data corresponding to that horizontal resolution angle. The point cloud data for all columns constitutes the point cloud data corresponding to the detection field of view of the LiDAR.

As an optional example, the aforementioned plurality of target echo data may be real-time echo data generated by the LiDAR. Performing occlusion monitoring using real-time echo data can improve the real-time performance of occlusion monitoring.

In S12, occlusion monitoring is performed within a safety monitoring zone based on the plurality of target echo data and preset spatial configuration information.

As an optional example, the aforementioned preset spatial configuration information may comprise angle-to-position mapping information.

Among these, the angle-to-position mapping information may be a mapping relationship between detection angles and specific positions within the safety monitoring zone; and the target echo count is echo data for which the amplitude value of a preamble signal corresponding to the echo data is greater than a preset threshold.

As an optional example, the safety monitoring zone of the LiDAR may be predivided based on the angular resolution of the LiDAR to obtain minimum mapping cells for mapping, thereby obtaining the mapping relationship between the radar detection angles and the position coordinates of objects within the safety monitoring zone, i.e., the mapping relationship between each minimum mapping cell and its corresponding detection angle.

In specific applications, the safety monitoring zone may correspond to minimum mapping cells, i.e., there is a mapping relationship between the safety monitoring zone and the minimum mapping cells. Through this mapping relationship, it can be determined which minimum mapping cells are included in the safety monitoring zone.

It can be understood that the LiDAR may be configured with a plurality of safety monitoring zones. Which minimum mapping cells correspond to each safety monitoring zone may all be configured based on actual monitoring requirements. The embodiments of the present application do not impose any specific limitation thereon.

In some embodiments, the aforementioned minimum mapping cells may also correspond to the angular resolution of the LiDAR, i.e., each point in the scanning field of view of the LiDAR is taken as one minimum mapping cell, meaning each minimum mapping cell corresponds to one detection angle (including a horizontal detection angle and a vertical detection angle) of the LiDAR.

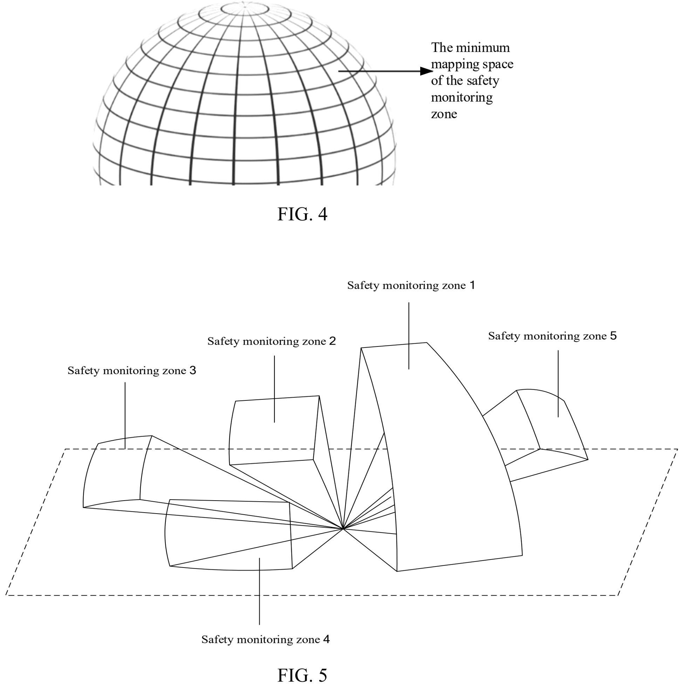

As an optional example, the angular space division parameters of the safety monitoring zone of the LiDAR may be set based on actual application requirements (i.e., minimum resolution and detection distance requirements), and the number of minimum mapping cells may also be set based on actual application requirements (i.e., minimum resolution and detection distance requirements). For example, the minimum mapping cell may be equivalent to the angular resolution of the LiDAR, i.e., the number of minimum mapping cells may correspond to the number of point cloud points of the LiDAR. As an example, as shown in FIG. 4, assuming the horizontal resolution range of the LiDAR is 280 degrees, it may be divided into 175 meridional zones, and the vertical scan may comprise 96-line scanning. By grouping every 4 lines into one area (i.e., the minimum mapping cell equals 4 points), the emission face of the LiDAR may be divided into 4200 minimum mapping cells, each having its corresponding horizontal angle range and vertical angle range.

It should be noted that FIG. 4 merely uses a spherical cover as the emission face of the LiDAR as an illustrative example. The safety monitoring zone division method provided by the embodiments of the present application may also be applied to other types of emission faces, such as cylindrical emission faces, rectangular emission faces, or sector-shaped emission faces, etc. The present application does not impose any specific limitation thereon.

It can also be understood that when dividing the safety monitoring zone of the LiDAR, the division may be performed at equal angles or at non-equal angles. Part of the zone may be divided at a first angle and another part at a second angle, wherein the first angle is different from the second angle (for example, the central zone may be divided at the first angle and the edge zone at the second angle, and the first angle is smaller than the second angle, thereby ensuring the accuracy of monitoring in the central zone while reducing the computing resources of the algorithm). The division may also be performed at different angles for all zones. The embodiments of the present application do not impose any specific limitation thereon.

In the embodiments of the present application, after dividing the angular space of the safety monitoring zone, each minimum mapping cell may be encoded in angular space order, with each encoding corresponding one-to-one to a certain minimum mapping cell. The encoding is then stored in the LiDAR as the aforementioned angle-to-position mapping information. By reading the encoding, the LiDAR can determine the correspondence between detection angles and the safety monitoring zone.

In another embodiment of the present application, the safety monitoring zones requiring contamination monitoring may be set based on actual detection requirements, and different target echo count thresholds corresponding to different safety monitoring zones may also be set based on actual detection requirements.

In specific applications, the target echo count threshold for each safety monitoring zone may be set arbitrarily. Based on the mapping relationship between the aforementioned minimum mapping cells and the safety monitoring zones, the target echo count threshold set for each safety monitoring zone is mapped to the minimum mapping cells, so that the target echo count threshold corresponding to each minimum mapping cell can be determined. The set target echo count thresholds may be stored in the flash memory of the LiDAR.

Exemplarily, please refer to FIG. 5, which shows a schematic diagram of the safety monitoring zones provided by an embodiment of the present application. As shown in FIG. 5, the safety monitoring zones of the LiDAR may comprise different zones, for example, safety monitoring zones 1 to 5 as shown in FIG. 5. Different safety monitoring zones may have different safety monitoring zone volumes, i.e., they may correspond to different safety monitoring zone ranges. Therefore, the number of minimum mapping cells corresponding to different safety monitoring zones may also be different. In addition, different target echo count thresholds may be set for different safety monitoring zones.

It can be understood that FIG. 5 is merely a schematic diagram of the configuration of safety monitoring zones. In actual applications, two safety monitoring zones may not overlap, or may partially overlap. For overlapping safety monitoring zones, if their target echo count thresholds differ, the overlapping portion may correspond to different target echo count thresholds.

In some implementations, the target echo count threshold corresponding to the safety monitoring zone of the central detection region may be set to be different from the target echo count threshold corresponding to the safety monitoring zone of the edge detection region. Specifically, the target echo count threshold corresponding to the safety monitoring zone of the central detection region may be set to be smaller than the target echo count threshold corresponding to the safety monitoring zone of the edge detection region.

In some implementations, configuration information for the safety monitoring zone may be received by an interactive terminal device. Specifically, this may include the specific range of the safety monitoring zone (for example, the number of minimum mapping cells included in each safety monitoring zone), the safety distance threshold and target echo count threshold corresponding to each safety monitoring zone, etc. The received configuration information of the safety monitoring zone is then downloaded and stored in the LiDAR, and specifically may be stored in the flash memory of the LiDAR. When performing occlusion monitoring, the LiDAR can read the relevant configuration information and then determine the safety distance threshold of each safety monitoring zone.

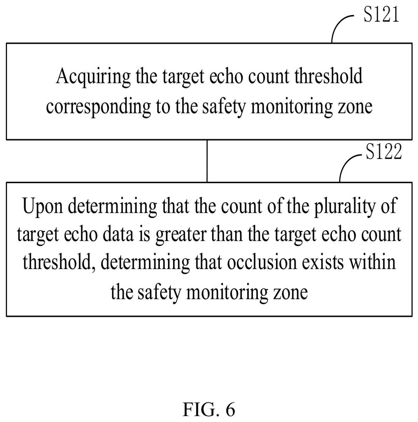

Please refer to FIG. 6, which shows a schematic flowchart of step S12 in the occlusion monitoring method provided by an embodiment of the present application. As shown in FIG. 6, in an embodiment of the present application, the aforementioned S12 may specifically comprise the following steps:
S121: acquiring the target echo count threshold corresponding to the safety monitoring zone.

In an embodiment of the present application, the LiDAR may determine whether occlusion exists based on the target echo count. Specifically, the point cloud data acquired by the LiDAR is a one-dimensional array or two-dimensional array of point cloud data. Therefore, the LiDAR may, based on the acquired echo data, detect whether there is target echo data satisfying the detection requirements within a preset detection window. If target echo data satisfying the detection requirements exists within the preset detection window, and the count of echo data is greater than the target echo count threshold, occlusion may be preliminarily determined to exist. It is further determined whether the occlusion appears within the safety monitoring zone. If so, occlusion within the safety monitoring zone can be confirmed; otherwise, it is determined that no occlusion has appeared in the safety monitoring zone.

As an optional example, the aforementioned preset detection window may be set based on actual application requirements, for example, it may be set to a 3x3 matrix, or may be set to a 2x3 matrix, a 3x4 matrix, a 4x4 matrix, a 4x3 matrix, a 4x5 matrix, a 5x5 matrix, a 5x4 matrix, etc. The embodiments of the present application do not impose any specific limitation thereon.

It can be understood that the target echo data is echo data for which the amplitude value of a preamble signal corresponding to the echo data and/or the area value of a preamble signal is greater than a preset threshold.

It can be understood that the method further comprises: acquiring the amplitude value and/or area value of the preamble signal corresponding to each of the plurality of target echo data; and determining an occlusion level based on the amplitude value and/or area value of the preamble signal corresponding to each of the target echo data.

Determining the occlusion level based on the amplitude value and/or area value of the preamble signal corresponding to each target echo data specifically comprises: determining the occlusion level based on the amplitude value of the preamble signal corresponding to each echo signal or the corresponding range.

Among these, it can be understood that when the amplitude value and/or area value of the preamble signal corresponding to each echo signal are all within the range corresponding to an occlusion level, it is determined that the echo signal is at that occlusion level.

It can be understood that, according to different ranges of the amplitude value and/or area value of the preamble signal corresponding to the echo data, occlusion may be classified into no occlusion, slight occlusion, partial occlusion, and severe occlusion. Among these, the specific classification of occlusion levels may be set based on detection requirements.

It can be understood that different types of occlusion may be calibrated for the amplitude value range of the preamble signal. For example, when the cover glass has no occlusion, the amplitude value and/or area value of the preamble signal of the cover glass may be calibrated to determine the range of the preamble signal amplitude and/or area of the target echo corresponding to the no-occlusion condition. When the cover glass has fingerprint oil stains, the amplitude value and/or area value of the preamble signal of the cover glass may be calibrated to determine the range of the preamble signal amplitude value and/or area value of the target echo corresponding to the slight occlusion condition. When the cover glass is occluded by a black cloth with 8.9% reflectance, the amplitude value and/or area value of the preamble signal of the cover glass may be calibrated to determine the range of the preamble signal amplitude value and/or area value of the target echo corresponding to the partial occlusion condition. When the cover glass is occluded by a white cloth, the amplitude value and/or area value of the preamble signal of the cover glass may be calibrated to determine the range of the preamble signal amplitude value and/or area value of the target echo corresponding to the severe occlusion condition.

Among these, it can be understood that when the cover glass is spherical or arcshaped, the range of amplitude values and/or area values of the preamble signals of the target echo corresponding to different channels may differ, and it is necessary to group different physical channels based on the curvature range of the cover glass, and calibrate the amplitude values and/or area values of the preamble signals of the target echo corresponding to the occlusion of the LiDAR based on different groups. Among these, it can be understood that each transmitting channel is one physical channel. For example, when the cover glass is spherical, every four channels may be taken as one calibration group, and the amplitude values and/or area values of the preamble signals of the occlusion echo corresponding to those four channels are acquired.

Among these, the target echo count threshold may be set based on detection requirements. For example, the target echo count threshold may be calculated based on the region where the output beam spot occludes 0.5. Among these, it can be understood that the region where the beam spot occludes 0.5 may be, for example, the region where horizontal occlusion is 0.5 simultaneously with the region where vertical occlusion is 0.5.

Specifically, the horizontal and vertical dimensions of the output beam spot are acquired; the relationship between the occlusion and the beam spot size is determined based on detection requirements; the arc length of the cover glass corresponding to the physical channel corresponding to the output beam spot is acquired; the target echo count threshold for horizontal occlusion is determined using the ratio of the horizontal dimension of the occlusion to the arc length of the cover glass; and the target echo count threshold for vertical direction occlusion is determined using the ratio of the vertical dimension of the occlusion to the arc length of the cover glass. The target echo count threshold for the occluded area corresponding to that physical channel is obtained based on the product of the target echo count threshold for horizontal occlusion and the target echo count threshold for vertical occlusion.

For example, the horizontal field of view angle corresponding to the transmitting channel to be measured may first be determined, and the arc length corresponding to that field of view angle is acquired (for example, the horizontal field of view angle corresponding to the transmitting channel to be measured is 0 degrees to 4 degrees, and the arc length of the cover glass corresponding to that horizontal field of view angle is 0.223 mm). The horizontal dimension of the beam spot corresponding to that transmitting channel is determined (such as the diameter of the beam spot in the horizontal direction). Based on the occlusion condition in the horizontal direction of the set detection requirement, the horizontal dimension corresponding to the occlusion condition is determined. For example, if the horizontal radius of the beam spot is 4.4 mm, and the condition for determining horizontal occlusion is horizontal occlusion of 1/3, then the horizontal occlusion beam spot length is 1.47 mm. Using 1.47/0.223 = 6.59, it can be determined that when the beam spot is horizontally occluded by 1/3 and there are 6 consecutive target echoes existing in the horizontal direction, that channel is determined to have horizontal occlusion.

Among these, it can be understood that the count of target echoes corresponding to the occlusion is also related to the radius of curvature of the cover glass. It can be understood that the larger the radius of curvature, the shorter the arc length, and thus, for the same beam spot size and the same occlusion condition, the larger the corresponding target echo count threshold. It can be understood that the smaller the radius of curvature, the shorter the arc length, and thus, for the same beam spot size and the same occlusion condition, the smaller the corresponding target echo count threshold.

S122: upon determining that the count of the plurality of target echo data is greater than the target echo count threshold, determining that occlusion exists within the safety monitoring zone.

Among these, it can be understood that corresponding target echo count thresholds may be set based on the detection requirements corresponding to different safety monitoring zones.

It can be understood that the target echo count threshold corresponding to the safety monitoring zone of the central detection region is not equal to the target echo count threshold corresponding to the safety monitoring zone of the edge detection region.

Among these, it can be understood that when a LiDAR system comprises a plurality of safety monitoring zones, occlusion can be determined based on the occlusion level corresponding to which different safety monitoring zones are determined to have occlusion. For example, for the central region, both partial occlusion and severe occlusion can be determined as occlusion. For the edge region, only severe occlusion is determined as occlusion.

In the embodiments of the present application, upon determining that occlusion has appeared in a certain zone, the safety monitoring zone corresponding to the current zone may be determined based on the detection angle corresponding to the current zone, and then the target echo count threshold corresponding to that safety monitoring zone is acquired. The occlusion level of that zone is determined through the average amplitude value range corresponding to the target echo. If the occlusion level satisfies the occlusion alarm level of the safety monitoring zone, an occlusion alarm is issued; otherwise, continuous monitoring may be maintained.

As an optional example, the target echo data comprises the detection angle corresponding to each echo data, and the amplitude information and/or area information corresponding to the preamble data.

It can be understood that the preamble data and the corresponding echo data may be output simultaneously.

More specifically, the amplitude information and area information corresponding to the preamble data may be extracted as feature information and output together with the echo data.

By dividing the radar detection angular space and obtaining the mapping relationship between the radar safety monitoring zone and the detection angles, upon determining that occlusion occurs in a certain zone, the detection angle corresponding to the occlusion is determined based on the target echo data. The corresponding safety monitoring zone, as well as the target echo count threshold corresponding to the occlusion in the safety monitoring zone, can then be determined through the aforementioned mapping relationship. Occlusion detection is performed based on the target echo count corresponding to the safety monitoring zone, ensuring the accuracy of occlusion monitoring, effectively simplifying the algorithmic complexity of the occlusion monitoring algorithm, reducing the computing resources consumed by the occlusion monitoring algorithm, and improving the recognition efficiency of occlusion monitoring.

In S13, upon determining that occlusion exists within the safety monitoring zone, an occlusion alarm operation is executed.

As an optional example, the aforementioned occlusion monitoring alarm operation may specifically be performed through the LiDAR or an alarm device connected to the LiDAR, to notify the user that occlusion exists in a certain safety monitoring zone so as to execute an occlusion alarm response in advance.

Exemplarily, taking the LiDAR applied to autonomous vehicles as an example, upon determining that occlusion exists within the safety monitoring zone, the LiDAR executes the occlusion monitoring alarm operation, for example, transmitting an occlusion monitoring alarm to the vehicle controller. The vehicle controller may then, based on the occlusion alarm information, execute a response operation such as reporting an error for the monitoring information of the occluded zone, or stopping the vehicle, etc.

Exemplarily, taking the LiDAR applied to a logistics vehicle as an example, upon determining that occlusion exists within the safety monitoring zone, the LiDAR executes the occlusion alarm operation. For example, transmitting an occlusion alarm to the vehicle controller, the vehicle controller may then, based on the occlusion alarm information, execute a response operation such as stopping the vehicle, etc.

As an optional example, upon determining that occlusion exists within the safety monitoring zone, the occlusion level may also be acquired based on the amplitude value and/or area value range of the preamble signal corresponding to the target echo, and an alarm may then be issued based on the occlusion level.

As can be seen from the above, the occlusion monitoring method provided by the embodiments of the present application, by dividing the radar detection angular space and obtaining the mapping relationship between the radar safety monitoring zone and the detection angles, upon determining that occlusion exists in a certain zone, the detection angle corresponding to the LiDAR can be determined based on the transmitting channel corresponding to the target echo data. The safety monitoring zone where the target is located, and the target echo count threshold corresponding to the safety monitoring zone, can then be determined through the aforementioned mapping relationship. Occlusion detection is performed based on the target echo count threshold, ensuring the accuracy of occlusion monitoring, effectively simplifying the algorithmic complexity of the occlusion monitoring algorithm, effectively reducing the computing resources consumed by the occlusion monitoring algorithm, and improving the recognition efficiency of occlusion monitoring.

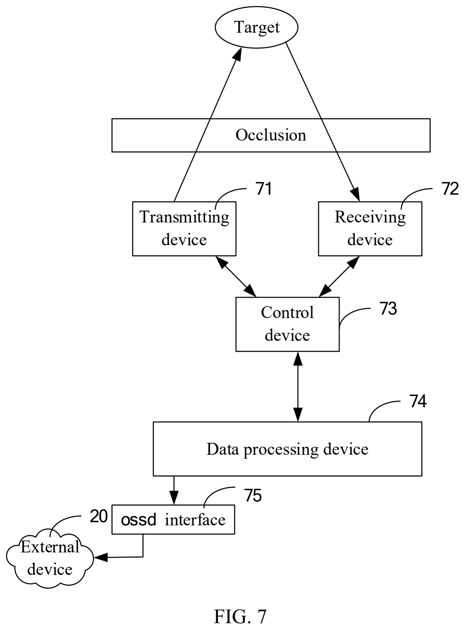

In an embodiment of the present application, the aforementioned occlusion monitoring method may be applied in an occlusion monitoring system as shown in FIG. 7. As shown in FIG. 7, the aforementioned occlusion monitoring system comprises a transmitting device 71, a receiving device 72, a control device 73, a data processing device 74, and a safety interface (Output Signal Switching Device, OSSD interface) 75.

Among these, the transmitting device 71 may transmit detection signals for target detection, the receiving device 72 may receive echo data reflected by the target, the control device 73 may control the operation of the transmitting device 71 and the receiving device 73, the aforementioned data processing device 74 may implement the occlusion monitoring method provided by the embodiments of the present application based on the echo data, and may feed back occlusion alarm information to the external device 20 through the OSSD interface 75.

In specific applications, the aforementioned occlusion monitoring system may be installed indoors. For example, the LiDAR is installed indoors, safety monitoring zones are set, target echo data is acquired through the LiDAR, and the occlusion monitoring method is executed through the aforementioned data processing device 74. Upon detecting occlusion within the safety monitoring zone, alarm information is fed back to the external device through the OSSD interface 75, which can then control the alarm device through the external device to issue an alarm.

In specific applications, the aforementioned alarming through the external device controlling the alarm device may specifically involve controlling the alarm device to issue an audio alarm, a vibration alarm, etc., or may involve issuing an image alarm or a text alarm through a display device, etc. The present application does not impose any specific limitation thereon.

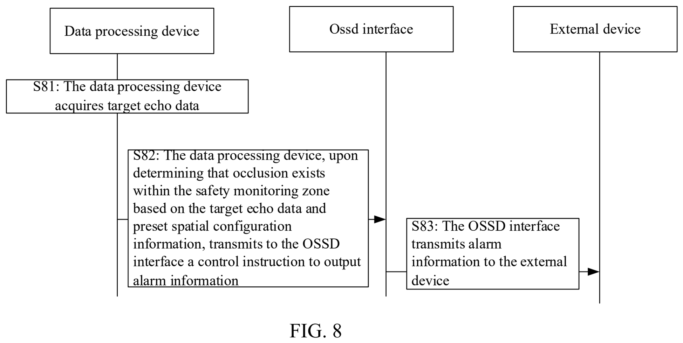

Please refer to FIG. 8, which shows a specific interaction diagram of the occlusion monitoring method based on the occlusion monitoring system shown in FIG. 7. As shown in FIG. 8, the occlusion monitoring method provided by an embodiment of the present application may comprise the following steps:
S81: The data processing device acquires target echo data.
S82: The data processing device, upon determining that occlusion exists within the safety monitoring zone based on the target echo data and preset spatial configuration information, transmits to the OSSD interface a control instruction to output alarm information.
S83: The OSSD interface transmits alarm information to the external device.

It should be noted that the relevant content of the aforementioned S81 to S82 may be referred to in the descriptions of S11 to S12, and the present application does not repeat this here.

In specific applications, the aforementioned data processing device may specifically be the data processing module within the LiDAR, and the OSSD interface may be the safety interface of the functional safety LiDAR. The occlusion monitoring information is output to the control device of the monitoring system (i.e., the external device) through the OSSD interface, thereby implementing the occlusion alarm function of the functional safety LiDAR.

In specific applications, the LiDAR may comprise a plurality of safety interfaces, for example, 2, 3, 4, etc. The embodiments of the present application do not impose any specific limitation thereon.

It should be understood that the magnitude of the sequence numbers of the steps in the above embodiments does not imply the order of execution. The order of execution of each process should be determined by its function and internal logic, and should not constitute any limitation on the implementation process of the embodiments of the present application.

Based on the occlusion monitoring method provided by the above embodiments, the embodiments of the present application further provide embodiments of an occlusion monitoring apparatus that implements the above method embodiments.

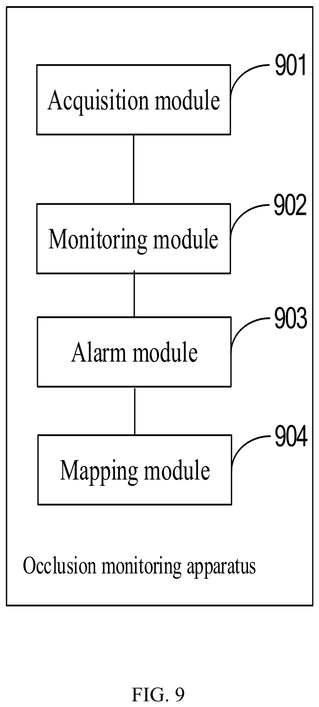

Please refer to FIG. 9, which is a schematic structural diagram of an occlusion monitoring apparatus provided by an embodiment of the present application. In the embodiments of the present application, the occlusion monitoring apparatus is applied to a radar system, and the units comprised in the occlusion monitoring apparatus are used to execute each step in the embodiment corresponding to FIG. 9. Please refer specifically to FIG. 9 and the relevant descriptions in the embodiment corresponding to FIG. 9. For ease of explanation, only the parts related to the present embodiment are shown. As shown in FIG. 9, the aforementioned occlusion monitoring apparatus may comprise an acquisition module 901, a monitoring module 902, and an alarm module 903, wherein:

The acquisition module 901 is configured to acquire a plurality of target echo data.

The monitoring module 902 is configured to perform occlusion monitoring within a safety monitoring zone based on the plurality of target echo data and preset spatial configuration information.

The alarm module 903 is configured to execute an occlusion alarm operation upon determining that occlusion exists within the safety monitoring zone.

Among these, the preset spatial configuration information comprises angle-to-position mapping information, the angle-to-position mapping information being a mapping relationship between detection angles and specific positions within the safety monitoring zone; and the target echo data is echo data for which the amplitude value of a preamble signal corresponding to the echo data is greater than a preset threshold.

In some implementations, the aforementioned monitoring module 902 is specifically configured to acquire the target echo count threshold corresponding to the safety monitoring zone; and upon determining that the count of the plurality of target echo data is greater than the target echo count threshold, determine that occlusion exists within the safety monitoring zone.

In some implementations, the aforementioned occlusion monitoring apparatus further comprises a mapping module 904. The mapping module is specifically configured to divide the safety monitoring zone of the LiDAR based on the angular resolution of the LiDAR to obtain minimum mapping cells for mapping; and generate the angle-to-position mapping information based on each minimum mapping cell and the detection angle range corresponding to each minimum mapping cell.

In some implementations, the aforementioned mapping module 904 may also specifically be configured to encode each minimum mapping cell in angular space order; and determine the encoding as the angle-to-position mapping information.

In some implementations, the monitoring module 902 is further configured to acquire the amplitude value of the preamble signal or the area value of the preamble signal corresponding to each of the plurality of target echo data; the monitoring module 902 is further configured to determine an occlusion level based on the amplitude value of the preamble signal or the area value of the preamble signal corresponding to each target echo signal; and the alarm module 903 is specifically configured to, upon determining that occlusion exists within the safety monitoring zone, execute the occlusion alarm operation based on the occlusion level.

In some implementations, the aforementioned LiDAR is configured with a plurality of safety monitoring zones, and corresponding target echo count thresholds are set based on the detection requirements corresponding to different safety monitoring zones.

In some embodiments, the target echo count threshold corresponding to the safety monitoring zone of the central detection region is not equal to the target echo count threshold corresponding to the safety monitoring zone of the edge detection region.

It should be noted that the information interaction and execution process among the aforementioned units are based on the same concept as the method embodiments of the present application. For the specific functions and resulting technical effects, reference may be made to the method embodiment section, and details will not be repeated here.

Therefore, the occlusion monitoring apparatus provided by the embodiments of the present application is also capable of, by dividing the radar detection angular space and obtaining the mapping relationship between the radar safety monitoring zone and the detection angles, upon determining that a target appears in a certain zone, determining the detection angle corresponding to the LiDAR based on point cloud data. The safety monitoring zone where the target is located, and the safety distance threshold corresponding to the safety monitoring zone, can then be determined through the aforementioned mapping relationship. Occlusion detection is performed based on the safety distance threshold and the detection distance of the target, ensuring the accuracy of occlusion monitoring, effectively simplifying the algorithmic complexity of the occlusion monitoring algorithm, effectively reducing the computing resources consumed by the occlusion monitoring algorithm, and improving the recognition efficiency of occlusion.

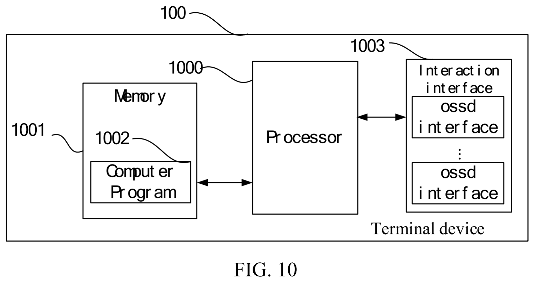

FIG. 10 is a schematic structural diagram of a terminal device provided by an embodiment of the present application. As shown in FIG. 10, the terminal device 100 provided by this embodiment comprises: a processor 1000, a memory 1001, and a computer program 1002 stored in the aforementioned memory 1001 and executable on the aforementioned processor 1000, such as an occlusion monitoring program. As shown in FIG. 10, the aforementioned terminal device may also comprise an interactive interface 1003, wherein the interactive interface 1003 may comprise at least two OSSD interfaces. When the processor executes the occlusion monitoring program and recognizes that occlusion exists in the safety monitoring zone, at least one OSSD interface is used as an external interface satisfying functional safety standard requirements to output an alarm signal. For example, redundant OSSD interfaces may be used as the external interfaces to achieve functional safety. The processor 1000, upon executing the aforementioned computer program 1002, implements the steps in each of the above occlusion monitoring method embodiments, such as steps S11 to S13 shown in FIG. 3. Alternatively, the aforementioned processor 1000, upon executing the aforementioned computer program 1002, implements the functions of the modules/units in each of the above terminal device embodiments, such as the functions of units 901 to 903 shown in FIG. 9.

Exemplarily, the aforementioned computer program 1002 may be divided into one or more modules/units, and the aforementioned one or more modules/units are stored in the aforementioned memory 1001 and executed by the processor 1000 to complete the present application. The aforementioned one or more modules/units may be a series of computer program instruction segments capable of completing specific functions, and the instruction segments are used to describe the execution process of the aforementioned computer program 1002 in the aforementioned terminal device 100. For example, the aforementioned computer program 1002 may be divided into an acquisition unit, a determination unit, and a computation unit. For the specific functions of each unit, please refer to the relevant descriptions in the embodiment corresponding to FIG. 10. Details will not be repeated here.

The aforementioned terminal device may comprise, but is not limited to, a processor 1000 and a memory 1001. Those skilled in the art will understand that FIG. 10 is merely an example of the terminal device 100 and does not constitute a limitation on the terminal device 100. It may comprise more or fewer components than those shown, or may combine certain components, or may use different components. For example, the aforementioned terminal device may also comprise an input/output device, a network access device, a bus, etc.

The aforementioned processor 1000 may be a central processing unit (CPU), or may be other general-purpose processors, digital signal processors (DSPs), applicationspecific integrated circuits (ASICs), field-programmable gate arrays (FPGAs), or other programmable logic devices, discrete gate or transistor logic devices, discrete hardware components, etc. A general-purpose processor may be a microprocessor, or the processor may be any conventional processor, etc.

The aforementioned memory 1001 may be an internal storage unit of the aforementioned terminal device 100, such as a hard disk or memory of the terminal device 100. The aforementioned memory 1001 may also be an external storage device of the aforementioned terminal device 100, such as a plug-in hard disk, a smart media card (SMC), a secure digital (SD) card, or a flash card equipped on the aforementioned terminal device 100. Furthermore, the aforementioned memory 1001 may also comprise both internal storage units and external storage devices of the aforementioned terminal device 100. The aforementioned memory 1001 is used to store the aforementioned computer program and other programs and data required by the aforementioned terminal device. The aforementioned memory 1001 may also be used to temporarily store data that has already been output or is to be output.

An embodiment of the present application also provides a computer-readable storage medium. A computer program is stored in the computer-readable storage medium, and when the computer program is executed by a processor, the aforementioned occlusion monitoring method can be implemented.

An embodiment of the present application provides a computer program product. When the computer program product is executed on a terminal device, the terminal device is caused to implement the aforementioned occlusion monitoring method upon execution.

Those skilled in the art can clearly understand that for the convenience and brevity of description, the division of the above functional units and modules is merely used as an example. In actual applications, the above functions may be allocated to different functional units and modules as needed, i.e., the internal structure of the aforementioned terminal device may be divided into different functional units or modules to complete all or part of the functions described above. The functional units and modules in the embodiments may be integrated in one processing unit, or each unit may exist physically separately, or two or more units may be integrated in one unit. The aforementioned integrated unit may be implemented in the form of hardware or in the form of a software functional unit. Additionally, the specific names of the functional units and modules are only for the purpose of mutual distinction and are not intended to limit the scope of protection of the present application. For the specific working process of the units and modules in the aforementioned system, reference may be made to the corresponding process in the foregoing method embodiment, and details will not be repeated here.

In the above embodiments, the description of each embodiment has its own emphasis. Parts not described in detail or not recorded in an embodiment may be referred to in the relevant descriptions of other embodiments.

Those of ordinary skill in the art can appreciate that the units and algorithm steps of each example described in connection with the embodiments disclosed herein can be implemented with electronic hardware, or a combination of computer software and electronic hardware. Whether these functions are implemented in hardware or software depends on the specific application and design constraints of the technical solution. Those skilled in the art may implement the described functions using different methods for each specific application, but such implementation should not be considered to be beyond the scope of the present application.

## Claims

1. An occlusion monitoring method, comprising: acquiring a plurality of target echo data; performing occlusion monitoring within a safety monitoring zone based on the plurality of target echo data and preset spatial configuration information; wherein the preset spatial configuration information comprises angle-to-position mapping information, the angle-to-position mapping information being a mapping relationship between detection angles and specific positions within the safety monitoring zone; and the target echo data being echo data for which an amplitude value of a preamble signal corresponding to the echo data or an area value of a preamble signal is greater than a preset threshold; and executing an occlusion alarm operation upon determining that occlusion exists within the safety monitoring zone.

2. The occlusion monitoring method according to claim 1, wherein the performing occlusion monitoring within a safety monitoring zone based on the plurality of target echo data and preset spatial configuration information comprises: acquiring a target echo count threshold corresponding to the safety monitoring zone; and determining that occlusion exists within the safety monitoring zone upon determining that a count of the plurality of target echo data is greater than the target echo count threshold.

3. The occlusion monitoring method according to claim 1 or 2, wherein before the performing occlusion monitoring within a safety monitoring zone based on the target point cloud data and preset spatial configuration information, the method further comprises: dividing the safety monitoring zone of a LiDAR based on an angular resolution of the LiDAR to obtain minimum mapping cells for mapping; and generating the angle-to-position mapping information based on each of the minimum mapping cells and a detection angle range corresponding to each of the minimum mapping cells.

4. The occlusion monitoring method according to claim 3, wherein the generating the angle-to-position mapping information based on each of the minimum mapping cells and the detection angle range corresponding to each of the minimum mapping cells comprises: encoding each of the minimum mapping cells in angular space order; and determining the encoding as the angle-to-position mapping information.

5. The occlusion monitoring method according to claim 1, wherein the method further comprises: acquiring an amplitude value of a preamble signal or an area value of a preamble signal corresponding to each of the plurality of target echo data; and determining an occlusion level based on the amplitude value of the preamble signal or the area value of the preamble signal corresponding to each target echo signal; wherein the executing an occlusion alarm operation upon determining that occlusion exists within the safety monitoring zone comprises: executing the occlusion alarm operation based on the occlusion level upon determining that occlusion exists within the safety monitoring zone.

6. The occlusion monitoring method according to any one of claims 1 to 5, wherein the LiDAR is configured with a plurality of safety monitoring zones, and corresponding target echo count thresholds are set based on detection requirements corresponding to different safety monitoring zones.

7. The occlusion monitoring method according to claim 6, wherein a target echo count threshold corresponding to the safety monitoring zone of a central detection region is not equal to a target echo count threshold corresponding to the safety monitoring zone of an edge detection region.

8. An occlusion monitoring apparatus, comprising: an acquisition module, configured to acquire a plurality of target echo data; a monitoring module, configured to perform occlusion monitoring within a safety monitoring zone based on the plurality of target echo data and preset spatial configuration information; wherein the preset spatial configuration information comprises angle-to-position mapping information, the angle-to-position mapping information being a mapping relationship between detection angles and specific positions within the safety monitoring zone; and the target echo data being echo data for which an amplitude value of a preamble signal corresponding to the echo data is greater than a preset threshold; and an alarm module, configured to execute an occlusion alarm operation upon determining that occlusion exists within the safety monitoring zone.

9. A terminal device, comprising a memory, a processor, and a computer program stored in the memory and executable on the processor, wherein when the processor executes readable instructions of the computer program, the occlusion monitoring method according to any one of claims 1 to 7 is implemented.

10. A computer program product, wherein when the computer program product is executed on a terminal device, the terminal device is caused to implement the occlusion monitoring method according to any one of claims 1 to 7.
